# EUROPÄISCHE PATENTSCHRIFT

(11) **EP 0 846 577 B1**
(45) Veröffentlichungstag und Bekanntmachung des Hinweises auf die Patenterteilung: **10.10.2001**
(21) Anmeldenummer: 97120791.5
(22) Anmeldetag: 27.11.1997
(51) Int. Cl.: B60C 11/12

(54) **Fahrzeugreifen mit Einschnitten im Laufstreifen**
Vehicle tyre with a slitted tread
Bandage pneumatique de véhicule ayant un profil pourvu d'incisions

(30) Priorität: 06.12.1996 DE 19650655
(43) Veröffentlichungstag der Anmeldung: 10.06.1998
(73) Patentinhaber: Continental Aktiengesellschaft, 30165 Hannover (DE)
(72) Erfinder: Rodewald, Helmut, 31249 Rötzum (DE)

(56) Entgegenhaltungen:
- EP-A- 0 355 636
- EP-A- 0 456 949
- EP-A- 0 486 838
- US-A- 2 261 025
- PATENT ABSTRACTS OF JAPAN vol. 015, no. 329 (M-1149), 21. August 1991 & JP 03 125606 A (TOYO TIRE & RUBBER CO LTD), 29. Mai 1991

## Beschreibung

Die Erfindung bezieht sich auf einen Fahrzeugreifen gemäß dem Oberbegriff des Anspruches 1, also auf einen Fahrzeugreifen mit einem Laufstreifen, der Einschnitte sowohl in den beiden Schulterbereichen als auch im Mittenbereich aufweist.

Zur Herstellung von Einschnitten werden bekanntlich in der Vulkanisationsform entsprechende Lamellenbleche angeordnet, siehe **FR-PS 779 108.** Beim Aufbringen der Resterhebung des Reifenrohlinges und/oder beim radialen Zusammenfahren der den Laufstreifenbereich prägenden Segmente der Vulkanisationsform schneiden diese in die noch plastische Kautschukmischung des Laufstreifens ein. Die von den Lamellenblechen eingeprägten Einschnitte haben also eine Breite, die nicht gleich Null ist, um dies mit den Worten des Anspruches 1 der vorbekannten **DE-OS 29 08 219 A1** auszudrücken.

Aus **US-PS 5,301,727** ist ferner bekannt, solche Einschnitte in der Draufsicht wellenförmig zu gestalten.

Weil Rennlaufflächenmischungen erst bei hohen Temperaturen ihren maximalen Reibungsbeiwert erreichen, ist in den Vorwärmrunden eine Rollwiderstandserhöhung erwünscht. Gemäß **JP 58-194 605** soll dies durch Einschnitte einer Tiefe zwischen 1 und 3 mm erreicht werden. Bis zum Beginn des eigentlichen Rennens soll soviel vom Laufstreifen abgerieben sein, dass die Einschnitte von der Lauffläche verschwunden sind; darum haben die dortigen Einschnitte eine außerordentlich geringe Tiefe. In einem der Beispiele zeigt diese Schrift im Laufflächenmittenbereich eine höhere Einschnittdichte als in den beiden Schulterbereichen.

Bekanntlich dienen Einschnitte dazu den Laufstreifen aufzuweichen. Hierfür sind sowohl längsverlaufende als auch querverlaufende Einschnitte sowie Einschnitte mit dazwischen liegenden Winkeln bekannt. Aus der **DE 42 32 306 C 2** ist bekannt, dass die erreichte Aufweichung von der Tiefe der Einschnitte und der Dichte der Einschnitte beieinander abhängt. Es geht in jener Schrift um eine größere Aufweichung an den nacheilenden Klotzkanten drehsinngebundendener Reifen.

Das deutsche Gebrauchsmuster **GM 82 30 530,** veröffentlicht am 10. Februar 1983, lehrt einen Winterreifen für LKW, bei dem die Klötze der mittleren Klotzreihen an ihren längeren, sich im wesentlichen axial erstreckenden Klotzkanten dazu quer stehende Einschnitte aufweisen.

Die **EP 0 355 636 A** lehrt, in einem Schwerlast-Reifen dünne Einschnitte in der Laufflächenmitte tiefer auszuführen als in den Laufflächenrändern. Auch **EP 0 486 838 A, EP 0 456 949 A, US-PS 2,261,025** und **JP 03 125 606 A** weisen auf eine stärkere Laufflächenaufweichung im Mittenbereich als an den Laufflächenrändern durch unterschiedliche Einschnitt-Dichte und/oder Einschnitt-Tiefe hin.

Die bislang gebräuchlichen Reifen, vornehmlich solche für schnelle PKW, zeigen im Mittenbereich schon nach ihrer halben Lebensdauer einen größeren Abrieb als in den Schulterbereichen.

Aufgabe der Erfindung ist es, auf einfache Weise den Abrieb über der Axialerstreckung des Laufstreifens zu vergleichmäßigen. Vorzugsweise soll dabei die Bodenhaftung weiter verbessert werden.

Die Aufgabe wird erfindungsgemäß durch einen Fahrzeugreifen gemäß Anspruch 1 gelöst. Fahrzeugreifen gemäß Anspruch 1 sind dadurch gekennzeichnet, dass in zumindest einem der beiden Schulterbereiche die Einschnitte weniger dick sind als im Mittenbereich, sodass die durch die Einschnitte bedingte Aufweichung des Laufstreifens in dem besagten Schulterbereich kleiner ist als im Mittenbereich.

Die vorliegende Erfindung ist sowohl an drehsinngebundenen wie an nicht drehsinngebundenen Reifen zu verwirklichen.

Gemäß Anspruch 2 werden vorzugsweise solche Reifen, wo nur in einem der beiden Schulterbereichen die Einschnitte weniger dick sind, so herum am Fahrzeug montiert, dass die Einschnitte im fahrzeugäußeren Bereich weniger dick sind als im Mittenbereich, sodass die durch die Einschnitte bedingte Aufweichung des Laufstreifens im fahrzeugäußeren Schulterbereich kleiner ist als im Mittenbereich. Durch diese Maßnahme wird die Querkraftaufnahme an der besonders wichtigen kurvenäußeren Reifenschulter des kurvenäußeren Rades erhöht und dadurch das Kurvenverhalten verbessert. Dennoch ist die Laufleistung gegenüber einem Reifen gleichen Profiles aber gleichmäßiger Einschnittdicke über der Axialerstreckung des Laufstreifens vergrößert, wenn auch nicht ganz so deutlich wie bei einem Reifen gemäß Anspruch 3.

Letzterer ist dadurch gekennzeichnet, dass in beiden Schulterbereichen die Einschnitte weniger dick sind als im Mittenbereich (B), sodass die durch die Einschnitte bedingte Aufweichung des Laufstreifens in beiden Schulterbereichen kleiner ist als im Mittenbereich.

Die Erfindung wird nachfolgend anhand von zwei Figuren näher erläutert. Darin bezeichnet das Bezugszeichen 3 schlechthin einen Einschnitt schlechthin, also unabhängig davon, wie er ausgerichtet ist und wo er sich befindet. "3" ist also gewissermaßen ein Oberbegriff für alle Einschnitte. Zur genaueren Bezeichnung eines Längseinschnittes ist der Index "l" und eines Quereinschnittes der Index "q" an die "3" angehängt. Analog ist für diagonal verlaufende Einschnitte der Index "d" verwandt. Als letzter Index kann ein "a" oder "c" oder "b" angeordnet sein; diese an letzter Stelle befindlichen Indices ordnen die Einschnitte den Schulterbereichen A bzw. C bzw. dem Mittenbereich B zu.

Die Figuren zeigen im Maßstab 1:1 die Abwicklung einer radialen Projektion eines Laufstreifenprofiles auf eine Zylinderoberfläche, die den Reifenzenit tangiert.

Es zeigt:

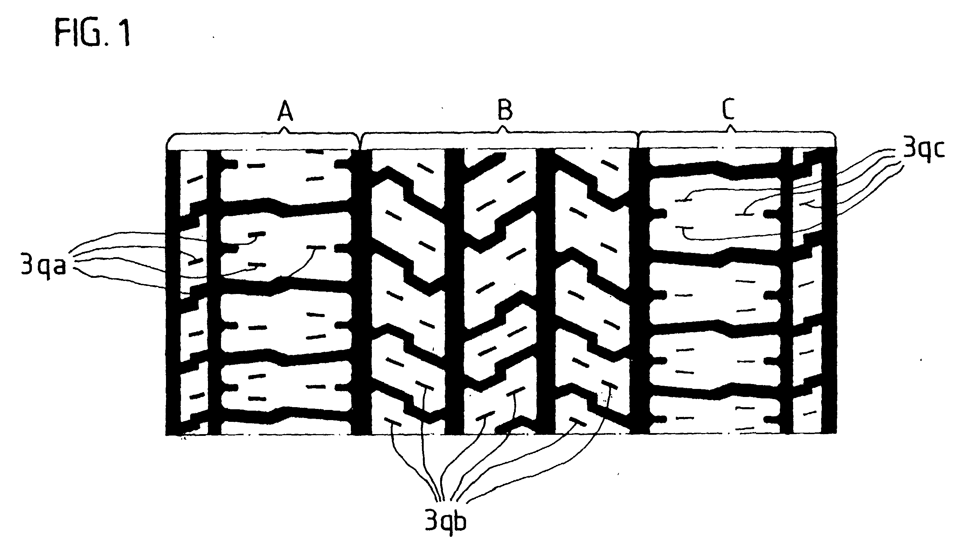

- Fig. 1: in einer ausschnittsweisen Draufsicht auf den Laufstreifen eines Fahrzeugreifens die Anordnung dicker Quereinschnitte im linken Schulterbereich und im Mittenbereich zusammen mit weniger dicken Einschnitten im rechten Schulterbereich und

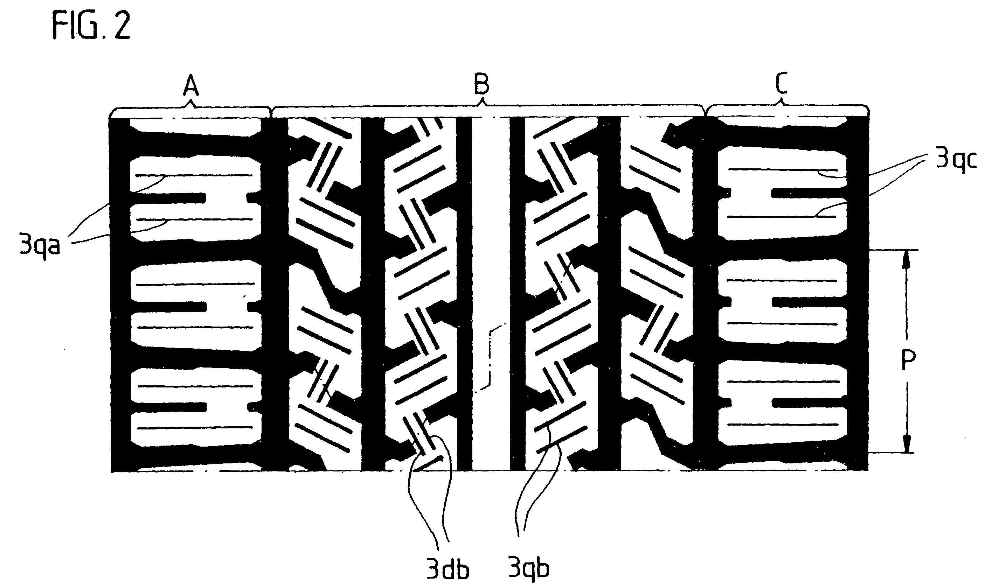

- Fig. 2: in einer ausschnittsweisen Draufsicht auf den Laufstreifen eines Fahrzeugreifens mit Anordnung dicht beieinander liegenden Quereinschnitten im Mittenbereich und weniger dicht beieinander liegenden Einschnitten in beiden Schulterbereichen, jedoch zusammen mit einigen etwa diagonal verlaufenden Einschnitten im Mittenbereich und in dem Schulterbereich, der zur Montage auf der fahrzeuginneren Seite vorgesehen ist, wobei die Einschnitte im Mittenbereich dicker sind als die in den Schulterbereichen.

Im Rahmen dieser Anmeldung bezeichnet man als Schulterbereiche die axial äußeren Bereiche des Laufstreifens mit einer Breite von 10% bis 25% der Laufflächenbreite. Als Mittenbereich ist der dazwischen liegende Bereich bezeichnet.

Als "Quereinschnitte" sind in dieser Anmeldung solche Einschnitte bezeichnet, welche um weniger als 45° zur Axialen geneigt sind. Als "Längseinschnitte" sind solche Einschnitte bezeichnet, welche um weniger als 45° gegenüber der Umfangsrichtung geneigt sind. Als "diagonal" wird eine etwa dazwischen liegende Winkellage bezeichnet, also um etwa 45° geneigt gegenüber der Axialen oder der Umfangsrichtung.

Figur 1 zeigt ausschnittsweise eine Draufsicht auf den Laufstreifen 2 eines Fahrzeugreifens 1. Die Profilgebung des Laufstreifens 2 gliedert sich in drei Bereiche, die von links nach rechts mit den Bezugszeichen A, B, C angesprochen sind. Diese Figur zeigt die Anordnung dicker Quereinschnitte 3qa im linken Schulterbereich A. Sie zeigt im Mittenbereich B ebenfalls dicke Quereinschnitte 3qb. Im rechten Schulterbereich C sind Quereinschnitte 3qc angeordnet, die erfindungsgemäß weniger dick sind als die Einschnitte 3qb im Mittenbereich B. Die Breite der dicken Einschnitte 3qa und 3qb beträgt 1 mm und die Breite der weniger dicken Einschnitte 3qc beträgt 0,5 mm.

Bei der in Figur 1 gezeigten Ausführungsform der Erfindung sind die Quereinschnitte 3qa im linken Schulterbereich A genauso dick ausgeführt wie im Mittenbereich B. In Abwandlung dieser Ausführungsform ist es auch möglich, die Quereinschnitte 3qa genauso dünn auszubilden wie die Quereinschnitte 3qc. Damit ergäbe sich ein nicht-seitengebundener Reifen, also ein Reifen, der bei Montage auf eine Felge in der einen Richtung genauso gut aufgezogen und gefahren werden kann wie in der anderen Richtung.

Figur 2 zeigt in einer ausschnittsweisen Draufsicht auf den Laufstreifen 2 eines Fahrzeugreifens 1 mit Anordnung dicht beieinander liegenden Quereinschnitten 3qb im Mittenbereich B und weniger dicht beieinander liegenden Quereinschnitten 3qa und 3qc in beiden Schulterbereichen A und C zusammen mit einigen etwa diagonal verlaufenden Einschnitten 3db im Mittenbereich B. Der zur Montage auf der fahrzeuginneren Seite vorgesehene Schulterbereich A oder C kann ebenfalls mit diagonalen Einschnitte 3da oder 3dc, wobei die Einschnitte 3qb und 3db im Mittenbereich B dicker sind als die in den Schulterbereichen A und C. In der ausschnittsweisen Draufsicht sind eineinhalb Pitches zu sehen. In den Schulterbereichen umfasst jeder Pitch zwei Klötze leicht unterschiedlichen Musters. In dem mit p bezeichneten Pitch weisen die Einschnitte 3qa und 3qc in den Schulterbereichen A und C einen Abstand von 11 mm auf. Je nach Größe der einzelnen Pitches variiert dieser Abstand. Der Abstand der Einschnitte 3qb und 3db im Mittenbereich B untereinander beträgt 4 mm bzw. 3 mm.

Der Kern der Erfindung ist der, dass der Laufstreifen 2 in seinem Mittenbereich B durch Einschnitte 3 stärker aufgeweicht ist als in einem oder in beiden Schulterbereichen A oder C. Dies erfolgt erfindungsgemäß durch eine Variation der Einschnittdicke über der Axialen. Hierdurch wird der Abrieb an den angetriebenen Achsen vergleichmäßigt. Weil besonders Winter-Laufflächenmischungen relativ abriebanfällig sind, empfiehlt sich die Erfindung besonders für Winterreifen.

## Patentansprüche

1. Fahrzeugreifen (1) mit einem Laufstreifen (2), der Einschnitte (3a, 3b, 3c) sowohl in den beiden Schulterbereichen (A, C) als auch im Mittenbereich (B) aufweist, **dadurch gekennzeichnet, dass** in zumindest einem der beiden Schulterbereiche (A oder C) die Einschnitte (3a bzw. 3c) weniger dick sind als im Mittenbereich (B).

2. Fahrzeugreifen (1) nach Anspruch 1, **dadurch gekennzeichnet, dass** die Einschnitte (3c) im fahrzeugäußeren Schulterbereich (C) weniger dick sind als im Mittenbereich (B).

3. Fahrzeugreifen (1) nach Anspruch 1, **dadurch gekennzeichnet, dass** in beiden Schulterbereichen (A und C) die Einschnitte (3a bzw. 3c) weniger dick sind als im Mittenbereich (B).

## Claims

1. Vehicle tyre (1), having a tread strip (2) which comprises incisions (3a, 3b, 3c) both in the two shoulder regions (A, C) and in the central region (B), **characterised in that** the incisions (3a or respectively 3c) are not as thick in at least one of the two shoulder regions (A or C) as in the central region (B).

2. Vehicle tyre (1) according to claim 1, **characterised in that** the incisions (3c) are not as thick in the shoulder region (C) on the outside of the vehicle as in the central region (B).

3. Vehicle tyre (1) according to claim 1, **characterised in that** the incisions (3a or respectively 3c) are not as thick in the two shoulder regions (A and C) as in the central region (B).

## Revendications

1. Bandage pneumatique pour véhicule (1) comportant une bande de roulement (2) qui présente des incisions (3a, 3b, 3c) aussi bien dans les deux zones d'épaulement (A, C) que dans la zone médiane (B), **caractérisé par** le fait que dans au moins l'une des deux zones d'épaulement (A ou C), les incisions (3a ou 3c) sont moins profondes que dans la zone médiane (B).

2. Bandage pneumatique pour véhicule (1) selon la revendication 1, **caractérisé par** le fait que les incisions (3c)dans la zone d'épaulement située côté extérieur du véhicule (C) sont moins profondes que dans la zone médiane (B).

3. Bandage pneumatique pour véhicule (1) selon la revendication 1, **caractérisé par** le fait que dans les deux zones d'épaulement (A et C), les incisions (3a ou 3c) sont moins profondes que dans la zone médiane (B).
